# EUROPÄISCHE PATENTSCHRIFT

(11) **EP 2 222 535 B1**
(45) Veröffentlichungstag und Bekanntmachung des Hinweises auf die Patenterteilung: **24.02.2016**
(21) Anmeldenummer: 08848319.3
(22) Anmeldetag: 05.11.2008
(51) Int. Cl.: B62D 21/11

(54) **VORDERACHSTRÄGER FÜR KRAFTFAHRZEUGE**
FRONT AXLE CARRIER FOR MOTOR VEHICLES
SUPPORT D'ESSIEU AVANT POUR VÉHICULES AUTOMOBILES

(30) Priorität: 08.11.2007 DE 102007053159; 28.12.2007 DE 102007063319; 30.04.2008 DE 102008021792; 09.10.2008 DE 102008050886
(43) Veröffentlichungstag der Anmeldung: 01.09.2010
(73) Patentinhaber: KSM Castings Group GmbH, 31137 Hildesheim (DE)
(72) Erfinder: BUSCHJOHANN, Thomas, 31171 Nordstemmen (DE); KAUERT, Heiko, 15827 Blankenfelde (DE); EICKMANN, Jürgen, 31174 Schellerten (DE); HENNINGS, Andreas, 69126 Heidelberg (DE); BÜHRIG-POLACZEK, Andreas, 52066 Aachen (DE); WÜRKER, Lars, 42897 Remscheid (DE); GREVEN, Klaus, 31141 Hildesheim (DE)
(74) Vertreter: Patentanwälte Thömen & Körner
(86) Internationale Anmeldenummer: PCT/DE2008/001816
(87) Internationale Veröffentlichungsnummer: WO 2009/059591

(56) Entgegenhaltungen:
- EP-A- 1 304 280
- EP-A- 1 386 827
- EP-A- 1 787 894
- WO-A-2007/031060

## Beschreibung

Die Erfindung betrifft einen Vorderachsträger für Kraftfahrzeuge.

Solche Träger, die auch als Schemel, Rahmen oder Hilfsrahmen bezeichnet werden, werden, nachdem sie mit Aggregaten bzw. Hilfsaggregaten versehen sind, als vormontierte Einheiten oder Module an Fahrzeugaufbauten, zum Beispiel an der Karosserie und/ oder an Längsträgern eines Fahrzeuges befestigt.

Ein Vorderachsträger ist beispielsweise in der WO 2007/031060 A1 offenbart, die auf den gleichen Anmelder zurückgeht.

Ausgehend von diesem Stand der Technik liegt der Erfindung die Aufgabe zugrunde, einen Vorderachsträger der eingangs genannten Art im Hinblick auf Gewicht und Kosten weiter zu optimieren, ohne dass sich die Optimierung am Vorderachsträger nachteilig auf die Fahrwerkskinematik auswirkt. Vorzugsweise soll die Fahrwerkskinematik verbessert werden.

Der Erfindung liegt hierbei weiterhin die Aufgabe zugrunde, einen Vorderachsträger der eingangs genannten Art bereitzustellen, welcher eine verbesserte Steifigkeit, insbesondere in Querrichtung, aufweist, um die am Vorderachsträger angreifenden hohen statischen als auch dynamischen Kräfte abzufangen. Zudem soll ein solcher Vorderachsträger besonders biege- und verwindungssteif ausgebildet sein.

Eine weitere Aufgabe der Erfindung besteht hierbei darin, einen solchen Vorderachsträger bereitzustellen, welcher eine besonders hohe Festigkeit aufweist und große Dauerbelastungen, insbesondere auch an dessen Anbindungs- bzw. Anschlussstellen oder Aufnahmen bzw. Ausnehmungen, aushält.

Eine weitere Aufgabe besteht hierbei darin, einen Vorderachsträger der eingangs genannten Art bereitzustellen, der im Fahrbetrieb auftretende Feder- bzw. Dämpferkräfte sowie Zug- und Druckschläge optimal aufnimmt bzw. abfängt.

Der Erfindung liegt hierbei weiterhin die Aufgabe zugrunde, einen Vorderachsträger der eingangs genannten Art bereitzustellen, welcher möglichst viele zum Fahrwerk und/oder Antrieb zugehörige Teile, welche aus Montage-, Karosseriebelastungs-, Komfort- und Steifigkeitsanforderungen her nicht unmittelbar am Karosserieaufbau befestigt werden, aufnimmt. Insbesondere soll ein gattungsgemäßer Vorderachsträger bereitgestellt werden, der besonders einfach die Vormontage und die Voreinstellung bzw. Justierung dieser Teile in einem Modul ermöglicht und dann besonders einfach am Karosserieaufbau befestigt werden kann. Insbesondere soll auch die Wartung, Reparatur, Montage und Demontage dieser Teile erleichtert werden. Zudem soll ein Vorderachsträger der eingangs genannten Art bereitgestellt werden, der nur wenig Bauraum im Kraftfahrzeug in Anspruch nimmt.

Eine weitere Aufgabe der Erfindung besteht hierbei darin, einen gattungsgemäßen Vorderachsträger bereitzustellen, welcher die Weiterleitung von Geräuschen und von Schwingungen, insbesondere von Aggregatschwingungen, besser dämpft. Zudem soll er die Anforderungen an die Eigenfrequenz erfüllen. Außerdem soll ein solcher Vorderachsträger bereitgestellt werden, der ein optimiertes Verhalten im Crashfall zeigt.

Diese Aufgabe wird bei einem Vorderachsträger der eingangs genannten Art durch den Anspruch 1 gelöst. Weiterbildungen und vorteilhafte Ausgestaltungen der Erfindung ergeben sich aus den übrigen Ansprüchen.

Die Lösung sieht einen Vorderachsträger für Kraftfahrzeuge vor, bei dem jeweils zwei in Fahrzeuglängsrichtung voneinander beabstandete Aufnahmen für die Lagerstellen zur Schwenklagerung je eines von zwei Radführungsgliedern, wie Quer- bzw. Dreieckslenker; und Aufnahmen zur Befestigung des Vorderachsträgers als vorgefertigte Einheit mitsamt vormontierten Aggregaten am Fahrzeugaufbau vorgesehen sind, sowie wenigstens einzelne der nachfolgend angeführten Aufnahmen für
- die Befestigung des Lenkgetriebes
- die Befestigung des Stabilisators
- die Lagerung einer Pendelstütze
und der Vorderachsträger als mit diesen Aufnahmen einstückiges und diese untereinander verbindendes Bauteil hergestellt ist, wobei die Aufnahmen zur Befestigung des Vorderachsträgers erste Aufnahmen umfassen, die untereinander mit einem Verbindungelement verbunden sind, wobei an diesem Verbindungselement wenigstens eine Aufnahme für Befestigungsmittel zur Festlegung der Abgasanlage vorgesehen ist.

Zweckmäßigerweise ist vorgesehen, dass die Aufnahmen derart miteinander verbunden sind, dass im Vorderachsträger gewichtsreduzierende Aussparungen in Form von Durchbrüchen und/oder einseitig offenen Aushöhlungen verbleiben, ohne dass die Fahrwerkskinematik nachteilig beeinflusst wird.

Weiterhin ist vorgesehen, dass wenigstens einzelne der Aufnahmen wenigstens teilweise über stabförmige und/oder flächenförmige Verbindungselemente im Vorderachsträger integriert und/oder miteinander verbunden sind.

Weiterhin ist vorgesehen, dass wenigstens einzelne der Aufnahmen wenigstens teilweise über offenprofilförmige Verbindungselemente, insbesondere solche mit im Wesentlichen T-, U-, V-, L-, X-, Y-, S-, Z- und/oder Doppel-T-förmigen Querschnitt, integriert und/oder miteinander verbunden sind.

Eine Weiterbildung der Erfindung sieht vor, dass die offenprofilförmigen Verbindungselemente verschieden, vorzugsweise horizontal oder vertikal, ausgerichtet sind.

Zweckmäßigerweise ist vorgesehen, dass einzelne Schenkel der offenprofilförmigen Verbindungselemente als Verstärkungsrippen ausgelegt sind.

Vorzugsweise weisen die Verbindungselemente zusätzliche Verstärkungsrippen, - gurte, -sicken, -wulste, -stege und/oder -durchbrüche auf.

Eine vorteilhafte Ausgestaltung der Erfindung sieht vor, dass die in Fahrtrichtung hintere Aufnahme zur Lagerung jedes der Radführungsglieder zumindest annähernd vertikal zur Fahrzeuglängsachse beabstandete Aufnahmeglieder besitzt, zur umgreifenden Halterung des in Fahrtrichtung hinteren Lagers am Radführungsglied, wobei die Aufnahmeglieder über eine U-förmige Lasche miteinander verbunden und im Vorderachsträger integriert sind.

Vorteilhaft ist vorgesehen, dass die Lasche wenigstens teilweise, vorzugsweise auf ihrer Außenseite, einen verstärkten Rand aufweist.

Weiterhin ist vorgesehen, dass die Lasche über wenigstens ein Verbindungselement mit einer ersten Aufnahme für Befestigungsmittel zur Festlegung des Vorderachsträgers am Fahrzeugaufbau verbunden ist.

Weiterhin ist vorteilhaft vorgesehen, dass die Laschen mit den ersten Aufnahmen sowie die ersten Aufnahmen untereinander über ein einziges stabförmiges oder offenprofilförmiges Verbindungselement verbunden sind, wobei das offenprofilförmige Verbindungselement vorzugsweise einen U-förmigen Querschnitt hat.

Die Erfindung sieht vor, dass an dem die ersten Aufnahmen untereinander verbindenden Verbindungselement, vorzugsweise auf der entgegen der Fahrtrichtung weisenden Seite, wenigstens eine, vorzugsweise zwei Aufnahmen für Befestigungsmittel zur Festlegung der Abgasanlage vorgesehen sind.

Eine vorteilhafte Ausgestaltung der Erfindung sieht vor, dass die Aufnahmen für Befestigungsmittel zur Festlegung der Abgasanlage und/oder die ersten Aufnahmen in und/oder an der entgegen der Fahrtrichtung weisenden Seitenwand, die durch einen der Schenkel des U-förmigen Verbindungselement gebildet ist, und/oder an und/oder in einer daran anschließenden flächigen Verstärkungslippe integriert sind.

Zweckmäßigerweise ist vorgesehen, dass das die ersten Aufnahmen untereinander verbindende Verbindungselement in und/oder entgegen der Fahrtrichtung an seiner Unterseite eine flächige, im Wesentlichen horizontal angeordnete Verstärkungslippe aufweist.

Vorteilhaft ist vorgesehen, dass innerhalb des die Aufnahmen, Laschen und/oder ersten Aufnahmen verbindenden profilförmigen Verbindungselements Verstärkungsrippen vorgesehen sind, die vorzugsweise gerade oder zickzackförmig von einer Seitenwand zur anderen Seitenwand und/oder vorzugsweise von den in und/oder an der einen Seitenwand angeordneten Aufnahmen vorzugsweise schräggestellt und/oder vorzugsweise gegenläufig zur gegenüberliegenden Seitenwand führen.

Weiterhin ist vorgesehen, dass die die Aufnahmeglieder verbindende Lasche über ein Verbindungselement mit der in Fahrtrichtung angeordneten Aufnahme für die Befestigung des Lenkgetriebes verbunden ist.

Eine Weiterbildung der Erfindung sieht vor, dass die Aufnahme für die Befestigung des Lenkgetriebes über ein vorzugsweise zumindest teilweise stabförmiges Verbindungselement mit der in Fahrtrichtung angeordneten zweiten Aufnahme zur Befestigung des Vorderachsträgers am Fahrzeugaufbau verbunden ist, welche ihrerseits vorzugsweise in einem Ausleger integriert unmittelbar mit der in Fahrtrichtung vorderen Aufnahme zur Lagerung jedes der Radführungsglieder verbunden ist.

Vorzugsweise ist an dem die Aufnahme für die Befestigung des Lenkgetriebes mit der zweiten Aufnahme bzw. dem Ausleger verbindenden Verbindungselement eine der Aufnahmen für die Befestigung des Stabilisators angebunden.

Weiterhin ist vorgesehen, dass die in Fahrtrichtung vordere Aufnahme zur Lagerung jedes der Radführungsglieder zwei zumindest annähernd in Fahrzeuglängsachse beabstandete Aufnahmeglieder besitzt, zur U-förmig umgreifenden Halterung des in Fahrtrichtung vorderen Lagers am Radführungsglied, wobei das eine Aufnahmeglied vorzugsweise unmittelbar an den Ausleger der Aufnahme anschließt und das andere Aufnahmeglied innerhalb des kurzen Schenkels einer L-förmigen Lasche, die mit ihrem nicht das Aufnahmeglied aufweisenden Ende vorzugsweise an den Ausleger anschließt, integriert ist.

Vorzugsweise weist die Lasche wenigstens teilweise, vorzugsweise auf ihrer Außenseite, einen verstärkten Rand auf.

Weiterhin ist vorgesehen, dass der Ausleger eine Aussparung aufweist, die einseitig oder beidseitig eingebracht ist.

Weiterhin ist vorgesehen, dass der Ausleger eine durchgehende Aussparung aufweist.

Eine vorteilhafte Ausgestaltung der Erfindung sieht vor, dass innerhalb der Aussparung eine Aufnahme für die Befestigung des Stabilisators vorgesehen ist, die bei einer durchgehenden Aushöhlung vorzugsweise über einen Steg an die Innenwand des Auslegers angeschlossen ist oder bei einer nicht durchgehenden Aushöhlung in der verbleibenden Fläche integriert und vorzugsweise an der Innenwand des Auslegers direkt angeordnet und/oder vorzugsweise mit wenigstens einer Versteifungsrippe versehen mit der oder den Innenwänden oder Versteifungsflächen des Auslegers verbunden ist.

Vorteilhaft ist vorgesehen, dass der Vorderachsträger in Querrichtung ein die Ausleger verbindendes Versteifungselement aufweist, in dem oder an dem die Aufnahme für die Lagerung der Pendelstütze angeordnet ist.

Weiterhin ist vorgesehen, dass das Versteifungselement stabförmig ausgebildet ist.

Zweckmäßig ist es, wenn das Versteifungselement offenprofilförmig, insbesondere mit im Wesentlichen T-, U-, V-, oder L-förmigen Querschnitt ausgebildet ist, wobei vorzugsweise die Kanten und Ränder des Versteifungselements verstärkt sind. Vorzugsweise weist das Versteifungselement im Bereich der Aufnahme für die Lagerung der Pendelstütze wenigstens eine, vorzugsweise zwei, nämlich jeweils eine zur jeder Seite der Aufnahme und mit dieser verbundene versteifende Schrägfläche auf, die vorzugsweise von einer im Wesentlichen horizontal angeordneten Teilfläche des Versteifungselements entgegengesetzt zur Fahrrichtung nach unten abfällt.

Weiterhin ist vorgesehen, dass an dem Versteifungselement auf der in und/oder entgegengesetzt der Fahrtrichtung weisenden Seite eine oder mehrere horizontal angeordnete, flächige Verstärkungslippen angeordnet sind.

Vorzugsweise ist die horizontal angeordnete Verstärkungslippe eben ausgebildet.

Weiterhin ist vorgesehen, dass die horizontal angeordnete Verstärkungslippe in einer Ebene unterhalb der in den Aufnahmegliedern vorgesehenen Bohrungen angeordnet ist.

Vorteilhaft ist vorgesehen, dass eine der Aufnahmen für die Befestigung des Lenkgetriebes über ein vorzugsweise stabförmiges Verbindungselement mit dem Versteifungselement verbunden ist.

Vorzugsweise bildet die erste Aufnahme zur Befestigung des Vorderachsträgers am Fahrzeugaufbau das hintere Ende des Vorderachsträgers.

Weiterhin ist vorgesehen, dass die Aufnahme für die Lagerung der Pendelstütze ein in Richtung einer der ersten Aufnahmen verlaufendes Verbindungselement aufweist und mit dieser direkt oder indirekt verbunden ist.

Eine zweckmäßige Ausgestaltung der Erfindung sieht vor, dass die Aufnahme für die Lagerung der Pendelstütze über ein Verbindungselement mit einer der Aufnahmen für die Befestigung des Lenkgetriebes verbunden ist.

Vorteilhaft weist das Versteifungselement an den zu den Auslegern führende Enden Knotenpunkte auf, in denen wenigstens einzelne, vorzugsweise mehrere vorzugsweise stabförmige Verbindungselemente zusammenlaufen.

Vorzugsweise ist der Vorderachsträger aus Leichtmetall, vorzugsweise aus einer Aluminium-Legierung, hergestellt.

Eine vorteilhafte Ausgestaltung der Erfindung sieht vor, dass das Bauteil in einem Leichtmetall-, vorzugsweise Aluminiumgussverfahren, besonders bevorzugt im Kokillengussverfahren, hergestellt ist.

Weiterhin ist vorgesehen, dass die Fläche der durch die Verbindungselemente begrenzten Aussparungen in Draufsicht auf den Vorderachsträger größer ist als die in Draufsicht auf den Vorderachsträger nicht durchgängige Fläche des Vorderachsträgers.

Vorzugsweise weist der Vorderachsträger zwei Aufnahmen für die Befestigung des Lenkgetriebes auf.

Zweckmäßigerweise ist vorgesehen, dass die Aufnahmen für die Befestigung des Lenkgetriebes und/oder die Aufnahmen für die Befestigung des Stabilisators an die stabförmigen Verbindungselemente über Stege angebunden sind.

Eine bevorzugte Ausgestaltung der Erfindung sieht vor, dass wenigstens einzelne der Aufnahmen über stabförmige Verbindungselemente fachwerkartig im Vorderachsträger integriert sind.

Dadurch wird zum einen Material und mithin Gewicht am Fahrzeug selbst sowie Kraftstoff eingespart, zum andern lassen sich dadurch aber auch die Transportkosten und die gefederten Massen verringern.

Die stabförmigen Verbindungselemente, die quasi materiallose Fächer begrenzen, sorgen hierbei für die erforderliche Steifigkeit ohne nachteiligen Einfluss auf die Fahrwerkskinematik. Insofern können die stabförmigen Verbindungselemente auch als stabförmige Versteifungselemente bezeichnet werden.

Wenn im Rahmen der vorliegenden Erfindung von Aufnahmen gesprochen wird, so sind damit auch Ausnehmungen umfasst.

Eine Weiterbildung der Erfindung sieht vor, dass zwei, vorzugsweise vier, besonders bevorzugt sechs, weiter besonders bevorzugt acht, weiter besonders bevorzugt zehn der Aufnahmen über stabförmige Verbindungselemente fachwerkartig im Vorderachsträger integriert, vorzugsweise direkt miteinander verbunden sind.

Dadurch lässt vorteilhaft weiter Gewicht einsparen, wobei die erforderliche Steifigkeit des Vorderachsträgers erhalten bleibt. Durch eine derartige Ausgestaltung sind optimale Festigkeitswerte bei geringstmöglichem Materialeinsatz zu verwirklichen.

Vorteilhaft ist vorgesehen, dass die in Fahrtrichtung hintere Aufnähme zur Langerung jedes der Radführungsglieder zumindest annähernd vertikal zur Fahrzeuglängsachse beabstandete Aufnahmeglieder besitzt, zur umgreifenden Halterung des in Fahrtrichtung hinteren Lagers am Radführungsglied, wobei vorzugsweise jedes Aufnahmeglied über wenigstens ein, vorzugsweise über wenigstens zwei stabförmige Verbindungselemente im Vorderachsträger integriert ist. Eine derartige materialarme Aufnahme erfüllt ihre Aufgabe ohne negativen Einfluss auf die erforderliche Integration im Vorderachsträger.

Vorzugsweise ist wenigstens ein, vorzugsweise jedes Aufnahmeglied über ein stabförmiges Verbindungselemente mit einer ersten Aufnahme für Befestigungsmittel zur Festlegung des Vorderachsträgers am Fahrzeugaufbau verbunden ist.

Eine vorteilhafte Ausgestaltung der Erfindung sieht vor, dass wenigstens ein Aufnahmeglied über ein stabförmiges Verbindungselement mit der in Fahrtrichtung vorderen Aufnahme zur Lagerung jedes der Radführungsglieder verbunden ist, wobei das stabförmige Verbindungselement vorzugsweise annährend in Fahrzeuglängsrichtung verläuft.

Zweckmäßigerweise ist vorgesehen, dass die die in Fahrtrichtung vordere Aufnahme zur Lagerung jedes der Radführungsglieder zwei zumindest annähernd in Fahrzeuglängsachse beabstandete Aufnahmeglieder besitzt, zur U-förmig umgreifenden Halterung des in Fahrtrichtung vorderen Lagers am Radführungsglied.

Der Vorderachsträger weist vorteilhaft in Querrichtung zwischen den in Fahrtrichtung vorderen Aufnahmen zur Lagerung jedes der Radführungsglieder wenigstens ein Versteifungselement, vorzugsweise in Form eines horizontal angeordneten Flächenelements, auf.

Ein derartiges Versteifungselement nimmt die in Querrichtung auf die vorgenannten Aufnahmen wirkenden Kräfte auf. Dadurch, dass das Versteifungselement flächig ausgebildet ist, wird zudem die Steifigkeit des in Fahrtrichtung vorderen Aufnahmegliedes der vorgenannten Aufnahme bei geringst möglichem Materialeinsatz erhöht. Zudem kann ein derartiges Versteifungselement derart angeordnet sein, dass andere Aggregate, insbesondere Motor und Getriebe, dicht am Vorderachsträger positioniert werden können. Es ist so weniger Bauraum erforderlich.

Das horizontal angeordnete Flächenelement ist vorzugsweise eben ausgebildet. Der in Fahrtrichtung weisende Rand des Flächenelements kann zusätzlich oder alternativ eine halbovalförmige Einbuchtung aufweisen.

Weiterhin ist vorgesehen, dass das horizontal angeordnete Flächenelement in einer Ebene unterhalb der in den Aufnahmegliedern vorgesehenen Bohrungen angeordnet ist.

Aggregate, insbesondere Motor und Getriebe, lassen sich so sehr dicht am Vorderachsträger positionieren, so dass weniger Bauraum im Fahrzeug erforderlich ist.

Vorzugsweise ist eine erste Aufnahme zur Befestigung des Vorderachsträgers am Fahrzeugaufbau vorgesehen, welche das in Fahrtrichtung hintere Ende des Vorderachsträgers bildet.

Vorzugsweise ist eine zweite Aufnahme zur Befestigung des Vorderachsträgers am Fahrzeugaufbau vorgesehen, welche in einen Ausleger integriert im unmittelbaren Bereich der in Fahrtrichtung vorderen Aufnahme angeordnet ist.

Der Vorderachsträger weist vorteilhaft ein annährend zentrales, an die Aufnahme für die Lagerung der Pendelstütze zumindest teilweise anschließendes und entgegengesetzt der Fahrtrichtung sich aufweitendes flächiges Versteifungselement auf.

Durch eine derartige Ausgestaltung sind optimale Festigkeitswerte bei geringstmöglichem Materialeinsatz zu verwirklichen, wobei eine derartige Ausgestaltung insbesondere vertikalen Schwingungen entgegenwirkt.

Vorzugsweise ist das flächige Versteifungselement wenigstens teilweise von Verstärkungsrippen begrenzt.

Weiterhin ist vorgesehen, dass das flächige Versteifungselement zum entgegengesetzt der Fahrtrichtung hinteren Rand hin eine Art Wulst bildet, die auf Unterseite hohl ausgebildet ist und einen V-Querschnitt besitzt.

Durch eine derartige Ausgestaltung sind optimale Festigkeitswerte bei geringstmöglichem Materialeinsatz zu verwirklichen

Das flächige Versteifungselement weist vorteilhaft am entgegengesetzt der Fahrtrichtung hinteren Rand Knotenpunkte auf, in denen wenigstens einzelne, vorzugsweise mehre stabförmige Verbindungselemente zusammenlaufen.

Eine vorteilhafte Ausgestaltung der Erfindung sieht vor, dass die erste Aufnahme zur Befestigung des Vorderachsträgers am Fahrzeugaufbau über wenigstens ein stabförmiges Verbindungselement mit dem flächigen Versteifungselement verbunden ist.

Weiterhin ist es vorteilhaft, dass auf dem flächigen Versteifungselement wenigstens eine Verstärkungsrippe vorgesehen ist, die vorzugsweise in Fahrzeuglängsrichtung wenigstens teilweise zwischen dem hinteren Rand des flächigen Versteifungselements und der Aufnahme für die Lagerung der Pendelstütze angeordnet ist.

Vorteilhaft ist der Vorderachsträger aus Leichtmetall, vorzugsweise aus einer Aluminium-Legierung, hergestellt. Weiterhin kann es vorteilhaft sein, wenn das Bauteil in einem Aluminiumgussverfahren, vorzugsweise im Kippkokillengussverfahren, hergestellt ist.

Eine vorteilhafte Ausgestaltung sieht vor, dass die Fläche der durch die stabförmigen Verbindungselemente begrenzten Fächer in Draufsicht auf den Vorderachsträger größer ist als die in Draufsicht auf den Vorderachsträger nicht durchgängigen Fläche des Vorderachsträgers, vorzugsweise zumindest größer ist als die in Draufsicht auf den Vorderachsträger nicht durchgängigen Fläche des Versteifungselements.

Weiterhin ist es vorteilhaft, wenn der Vorderachsträger nur noch zwei Aufnahmen für die Befestigung des Lenkgetriebes aufweist.

Gemäß einer Weiterbildung ist vorgesehen, dass die Aufnahmen für die Befestigung des Lenkgetriebes und/oder die Aufnahmen für die Befestigung des Stabilisators über Stege an die stabförmigen Verbindungselemente angebunden sind.

Vorzugsweise besteht der erfindungsgemäße Vorderachsträger aus einer AI-Gusslegierung, wie sie in der WO 2007/025528 A2 offenbart ist. Der Offenbarungsgehalt dieser Veröffentlichung wird durch ausdrücklichen Verweis als zum Gegenstand der vorliegenden Anmeldung gehörig in dieser aufgenommen.

Bevorzugt besteht der Vorderachsträger aus einer Al-Gusslegierung, die mindestens fünf der nachfolgend angeführten Legierungsbestandteile

| | |
|---|---|
| Si: | 2,5 bis 3,3, vorzugsweise 2,7 bis 3,1 Gew.-% |
| Mg: | 0,2 bis 0,7, vorzugsweise 0,3 bis 0,6 Gew.-% |
| Fe: | <0,18, vorzugsweise 0,05 bis 0,16 Gew.-% |
| Min: | < 0,5, vorzugsweise 0,05 bis 0,4 Gew.-% |
| Ti: | < 0,1, vorzugsweise 0,01 bis 0,08 Gew.-% |
| Sr: | < 0,03, vorzugsweise 0,01 bis 0,03 Gew.-% |
| Sonstige: | < 0,1 Gew.-% |

und zusätzlich Cr in einer die Festigkeit der Legierung steigernden Menge als weiteren Legierungsbestandteil enthält, jeweils zu 100 Gew.-% mit Al ergänzt.

Bevorzugt besteht der Vorderachsträger aus einer Al-Gusslegierung, die mindestens fünf der nachfolgend angeführten Legierungsbestandteile

| | |
|---|---|
| Si: | 2,5 bis 3,3, vorzugsweise 2,7 bis 3,1 Gew.-% |
| Mg: | 0,2 bis 0,7, vorzugsweise 0,3 bis 0,6 Gew.-% |
| Fe: | < 0,18, vorzugsweise 0,05 bis 0,16 Gew.-% |
| Mn: | < 0,5, vorzugsweise 0,05 bis 0,4 Gew.-% |
| Ti: | < 0,1, vorzugsweise 0,01 bis 0,08 Gew.-% |
| Sr: | < 0,03, vorzugsweise 0,01 bis 0,03 Gew.-% |
| Cr: | 0,3 bis 1,3, vorzugsweise 0,4 bis 1,0, |
| | besonders bevorzugt 0,5 bis 0,8 Gew.-% |
| Sonstige: | < 0,1 Gew.-% |

enthält, und jeweils zu 100 Gew.-% mit Al ergänzt ist.

Eine solche Al-Gusslegierung ist gegenüber dem Stand der Technik stärker, zäher und duktiler.

Das vorzugsweise Zulegieren von Cr in der genannten Größenordnung führt zu einer signifikanten Verbesserung der mechanischen Eigenschaften, die bereits im Gusszustand, insbesondere jedoch nach Lösungsglühen und gegebenenfalls Auslagern, zu verzeichnen ist.

Insbesondere hat sich gezeigt, dass durch solche Chromzusätze unerwünschte Eisenausscheidungen bereits im Gusszustand in eine günstigere Morphologie überführt werden können.

Für Fahrwerksanwendungen, insbesondere für radführende Bauteile, ergeben sich so insgesamt erhöhte mechanische Kennwerte.

Die erfindungsgemäßen Legierungen können herstellungsbedingte Verunreinigungen, z.B. Pb, Ni, Zn etc., enthalten, wie sie dem Fachmann allgemein bekannt sind.

Eine vorteilhafte Ausgestaltung der Erfindung sieht vor, dass zusätzlich CuNi durch gleichzeitiges Zulegieren als weiterer Legierungsbestandteil enthalten ist. Es hat sich gezeigt, dass alleinige Kupfer- oder Nickelzusätze zu keinen signifikanten Verbesserungen der mechanischen Eigenschaften führen. Das gleichzeitige Zulegieren von Kupfer und Nickel eröffnet jedoch neue Möglichkeiten der Anwendung der Legierung, insbesondere im Bereich außerhalb des Fahrwerks für temperaturbelastete Bauteile.

Die erfindungsgemäßen Legierungen weisen ein gegenüber bekannten Al-Gusslegierungen verbessertes Festigkeits-Dehnungsverhältnis auf.

Als Fertigungsverfahren für Werkstücke, Bauteile oder Teile für beziehungsweise von insbesondere Fahrwerksteilen von Kraftfahrzeugen aus der erfindungsgemäßen Gusslegierung ist grundsätzlich ein Dauerformgießverfahren geeignet. Aufgrund der sehr guten mechanischen Eigenschaften bei hochbeanspruchten Werkstücken, Bauteilen oder Teilen eignen sich besonders der Schwerkraft-Kokillenguss und der Niederdruck-Kokillenguss als Fertigungsverfahren. Als besonders geeignet hat sich das Gegendruck-Kokillengießverfahren (CPC-Verfahren) herausgestellt.

Es kann weiterhin vorteilhaft sein, wenn die Legierung komgefeint ist. Hierzu werden der Legierung so genannte Kornfeiner zugegeben. Kornfeinung ist eine Schmelzebehandlung, wobei unter dem Begriff "Kornfeinung" eine künstliche Erhöhung der Keimzahl in der Schmelze verstanden wird, die durch Einbringen und Verteilen von Fremdkeimen hervorgerufen wird. Dadurch wird insbesondere eine bessere Speisungsfähigkeit durch verbesserte Massenspeisung, eine verbesserte Formfüllungs- und Fließfähigkeit, eine Verringerung von Porositätsanfälligkeit und Warmrissneigung und eine dadurch erhöhte Duktilität sowie eine bessere Oberflächenbeschaffenheit der Gusslegierung erreicht.

Um die oben genannten Vorteile zu erzielen oder noch weiter zu entwickeln, ist es vorteilhaft, wenn die gegossenen Bauteile wärmebehandelt werden, insbesondere mit folgenden Parametern:

| | |
|---|---|
| Lösungsglühen | 490 bis 540°C für 1 bis 10h |
| Anlassen | 150 bis 200°C für 1 bis 10h |

Für manche Anwendungsfälle kann es aber auch vorteilhaft sein, lediglich eine einstufige Anlassbehandlung vorzunehmen, allgemein bekannt als beispielsweise T4, T5 oder 0.

Eine Festigkeitssteigerung der Gusstücke kann vorteilhaft durch Abschrecken der noch heißen Gussstücke in Wasser anstelle langsamer Abkühlung an der Luft erreicht werden.

Neben den bereits genannten Vorteilen, die Bauteile aus Legierungen gemäß der Erfindung aufweisen, kommt noch hinzu, dass wegen der fehlenden Legierungsbestandteile Cu und Zn die Korrosionsbeständigkeit bedeutend erhöht wird. Das Produkt ist auch relativ preiswert, weil keine dasselbe verteuernden Legierungszusätze, wie z.B. SE-Metalle, verwendet werden, es kann die übliche Schmelzbehandlung angewendet werden und es bedarf keines besonderen Aufwandes zur Kreislauftrennung. Ebenso wird aus Kostengründen vorzugsweise kein Ag als Legierungsbestandteil verwendet.

Es ist auch ein vorzügliches Festigkeits-Dehnungsverhältnis bei vorzüglicher Gießbarkeit vorhanden. Die Gießbarkeit ermöglicht zum einen ein von großen Fehlern, bekannt als Lunker, freies Gussstück, zum anderen wird die Mikrostruktur in einer solchen Weise positiv beeinflusst, dass die Anzahl innerer Kerben, die die Bruchdehnung verringern, möglichst gering gehalten wird.

Das Formfüllungsvermögen verbessert sich ebenfalls bei der erfindungsgemäßen Anwesenheit von Cr.

Nachfolgend wird die Erfindung anhand eines Ausführungsbeispiels erläutert, das in der Zeichnung dargestellt ist. In dieser zeigt:
- Fig. 1: eine perspektivische Darstellung eines erfindungsgemäßen Vorderachsträger in A) leicht schattierter Darstellung und B) als Liniendarstellung, jeweils in Draufsicht sowie
- Fig. 2: eine perspektivische Darstellung des erfindungsgemäßen Vorderachsträgers gemäß Fig. 1 in A) leicht schattierter Darstellung und B) als Liniendarstellüng in Unteransicht.

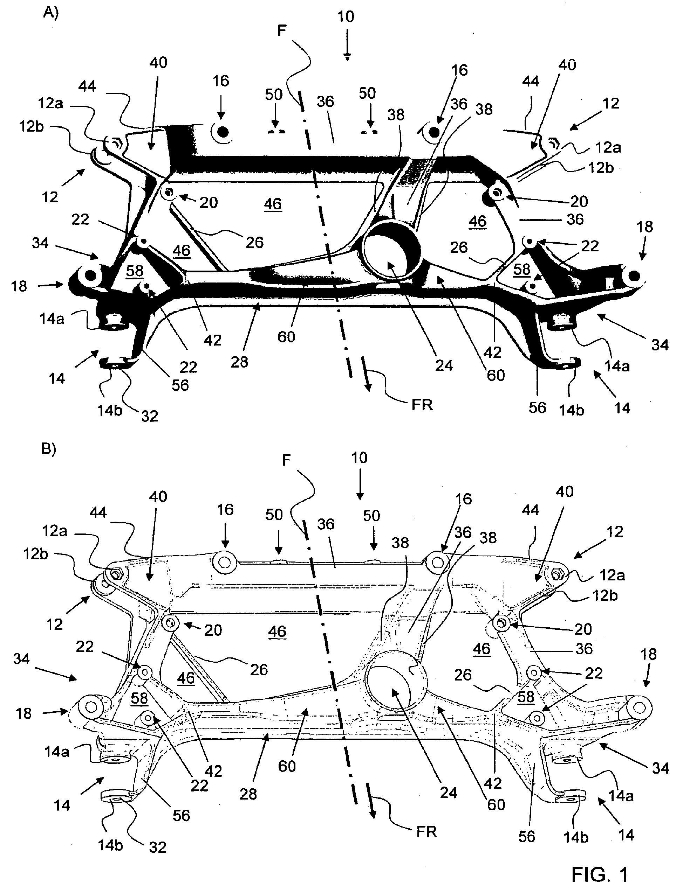

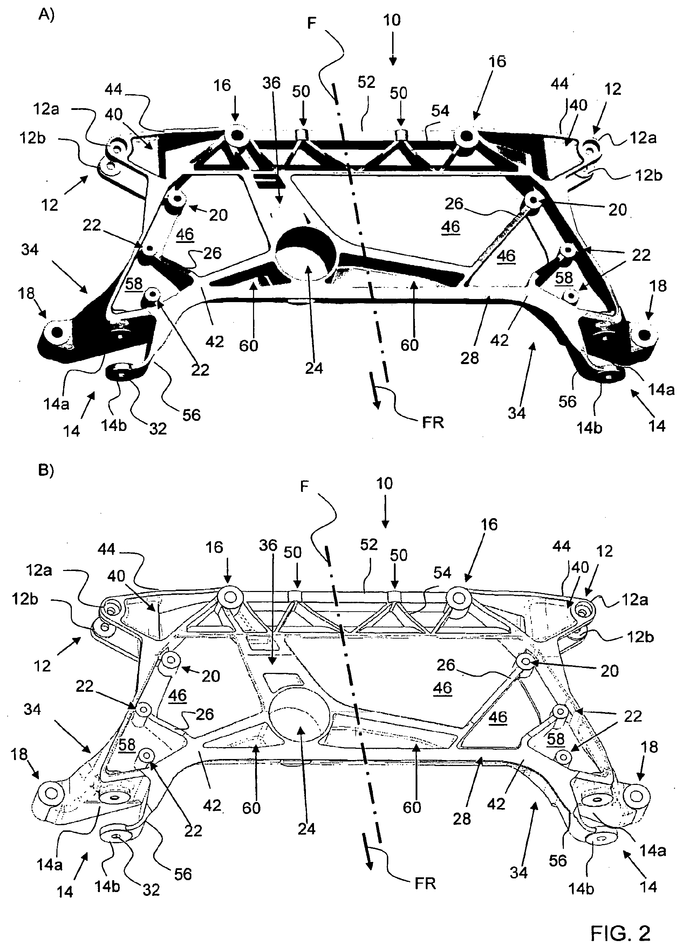

Die in den Fig. 1 und 2 dargestellten Vorderachsträger 10 für Kraftfahrzeuge umfassen jeweils zwei in Fahrzeuglängsrichtung F voneinander beabstandete Aufnahmen 12, 14 für die Lagerstellen zur Schwenklagerung je eines von zwei hier nicht dargestellten Querlertkern. Ferner sind jeweils zwei erste Aufnahmen 16 und zwei zweite Aufnahmen 18 zur Befestigung des Vorderachsträgers 10 am Fahrzeugaufbau vorgesehen.

Jeder Vorderachsträger 10 weist außerdem eine Aufnahme 24 für die Lagerung einer hier nicht dargestellten Pendelstütze und vier Aufnahmen 22 für die Befestigung eines hier nicht dargestellten Stabilisators auf.

Der in den Fig. 1 und 2 dargestellte Vorderachsträger 10 weist weiterhin zwei Laufnahmen 20 für die Befestigung des hier nicht dargestellten Lenkgetriebes auf.

Einzelne der Aufnahmen 20 und 22 sind über stabförmige Verbindungselemente 26 im Vorderachsträger 10 integriert.

Die in Fahrtrichtung FR hintere Aufnahme 12 zur Lagerung jedes der Querlenker besitzt zumindest annähernd vertikal zur Fahrzeuglängsachse F beabstandete Aufnahmeglieder 12a und 12b zur umgreifenden Halterung des in Fahrtrichtung FR hinteren Lagers am hier nicht dargestellten Querlenker.

Die in Fahrtrichtung FR vordere Aufnahme 14 zur Lagerung jedes der Querlenker besitzt zwei zumindest annähernd in Fahrzeuglängsrichtung F beabstandete Aufnahmeglieder 14a und 14b zur U-förmig umgreifenden Halterung des in Fahrtrichtung FR vorderen Lagers am hier nicht dargestellten Querlenker.

Die Aufnahmen 12, 14, 16, 18, 20, 22 und 24 sind in dem erfindungsgemäßen Vorderachsträger derart miteinander verbunden, dass insbesondere zwei große gewichtsreduzierende Aussparungen in Form von Durchbrüchen 46, aber auch einseitig offenen Aushöhlungen 30 verbleiben.

Einzelne der Aufnahmen, im vorliegenden Ausführungsbeispiel insbesondere die Aufnahmen 20, 22, sind wenigstens teilweise über stabförmige Verbindungselemente 26 und, im vorliegenden Ausführungsbeispiel insbesondere die Aufnahmen 16, 20, 22 und 24, wenigstens teilweise über flächenförmige Verbindungselemente 36, insbesondere über offenprofilförmige Verbindungselemente 36, im Vorderachsträger 10 integriert und/oder miteinander verbunden.

Die Aufnahmen 16 sind beispielsweise über ein offenprofilförmiges Verbindungselement 36 mit im Wesentlichen U-förmigen Querschnitt im Vorderachsträger 10 integriert und miteinander verbunden.

Die Aufnahme 20 ist beispielsweise mit einer der Aufnahmen 22 über ein offenprofilförmiges Verbindungselement 36 mit im Wesentlichen L-förmigen Querschnitt verbunden und im Vorderachsträger 10 integriert.

Die Aufnahme 24 ist beispielsweise über ein offenprofilförmiges Verbindungselement 36 mit im Wesentlichen U-förmigen Querschnitt mit dem die Aufnahmen 16 verbindenden Verbindungselement 36 verbunden. Erstgenanntes Verbindungselement 36 mit U-förmigen Querschnitt weist relativ kurze Schenkel auf, welche als Verstärkungsrippen 38 ausgelegt sind. Weiterhin ist auf der Oberseite dieses Verbindungselement noch eine zusätzliche quer verlaufende Verstärkungsrippe vorgesehen.

Wie bereits beschrieben, besitzt die in Fahrtrichtung FR hintere Aufnahme 12 zumindest annähernd vertikal zur Fahrzeuglängsachse F beabstandete Aufnahmeglieder 12a, 12b zur umgreifenden Halterung des in Fahrtrichtung FR hinteren Lagers am Radführungsglied.

Die Aufnahmeglieder 12a, 12b sind erfindungsgemäß über eine U-förmige Lasche 40 miteinander verbunden und im Vorderachsträger 10 integriert. Die Lasche 40 weist wenigstens teilweise, vorzugsweise auf ihrer Außenseite, einen verstärkten Rand 44 auf.

Erfindungsgemäß ist die Lasche 40 über wenigstens ein Verbindungselement mit einer ersten Aufnahme 16 verbunden.

Wie deutlich zu erkennen, sind die Laschen 40 mit den ersten Aufnahmen 16 am sowie die ersten Aufnahmen 16 untereinander über ein einziges offenprofilförmiges Verbindungselement 36 verbunden, wobei das offenprofilförmige Verbindungselement einen im Wesentlichen U-förmigen Querschnitt hat.

An dem die ersten Aufnahmen 16 untereinander verbindenden Verbindungselement 36, vorzugsweise auf der entgegen der Fahrtrichtung FR weisenden Seite, sind zwei Aufnahmen 50 für Befestigungsmittel zur Festlegung der hier nicht dargestellten Abgasanlage vorgesehen.

Die Aufnahmen 50 und die ersten Aufnahmen 16 sind hierbei erfindungsgemäß in und an der entgegen der Fahrtrichtung FR weisenden Seitenwand, die durch einen der Schenkel des U-förmigen Verbindungselement gebildet ist, sowie an und in einer daran anschließenden flächigen Verstärkungslippe 52 integriert.

Die Verstärkungslippe 52 ist im Wesentlichen horizontal an der Unterseite des die ersten Aufnahmen 16 untereinander verbindenden Verbindungselements entgegen der Fahrtrichtung FR angeordnet.

Innerhalb des die Laschen 40 und die ersten Aufnahmen 16 verbindenden profilförmigen Verbindungselements 36 sind Verstärkungsrippen 54 vorgesehen, die von den in und an der einen Seitenwand angeordneten Aufnahmen 16, 50 schräg gestellt und gegenläufig zur gegenüberliegenden Seitenwand führen.

Die Aufnahme 20 ist über ein zumindest teilweise stabförmiges Verbindungselement mit der in Fahrtrichtung FR angeordneten zweiten Aufnahme 18 zur Befestigung des Vorderachsträgers 10 am Fahrzeugaufbau verbunden. Die zweite Aufnahme 18 ist ihrerseits in einem Ausleger 34 integriert unmittelbar mit der in Fahrtrichtung F vorderen Aufnahme 14 zur Lagerung jedes der Radführungsglieder verbunden.

An dem die Aufnahme 20 mit der zweiten Aufnahme 18 bzw. dem Ausleger 34 verbindenden Verbindungselement ist eine der Aufnahmen 22 für die Befestigung des Stabilisators angebunden.

Die in Fahrtrichtung FR vordere Aufnahme 14 besitzt zwei zumindest annähernd in Fahrzeuglängsrichtung F beabstandete Aufnahmeglieder 14a, 14b, zur U-förmig umgreifenden Halterung des in Fahrtrichtung FR vorderen Lagers am Radführungsglied, wobei das eine Aufnahmeglied 14a unmittelbar an den Ausleger 34 der Aufnahme 18 anschließt und das andere Aufnahmeglied 14b innerhalb des kurzen Schenkels einer L-förmigen Lasche 56, die mit ihrem nicht das Aufnahmeglied aufweisenden Ende vorzugsweise an den Ausleger 34 anschließt, integriert ist.

Die Lasche 56 weist erfindungsgemäß wenigstens teilweise, vorzugsweise auf ihrer Außenseite, einen verstärkten Rand auf.

Der Ausleger 34 weist eine durchgehende Aussparung 58 auf.

Innerhalb der Aussparung 58 ist eine Aufnahme 22 für die Befestigung des Stabilisators vorgesehen ist, die bei der vorliegenden durchgehenden Aushöhlung über einen Steg an die Innenwand des Auslegers 34 angeschlossen ist.

Der Vorderachsträger 10 weist in Querrichtung ein die Ausleger 34 verbindendes Versteifungselement 60 auf, in dem die Aufnahme 24 für die Lagerung der Pendelstütze angeordnet ist. Das Versteifungselement 60 ist offenprofilförmig mit im Wesentlichen U-förmigen Querschnitt ausgebildet, wobei die Kanten und Ränder des Versteifungselements 60 verstärkt sind. Außerdem ist an dem Versteifungselement 60 auf der in und entgegengesetzt der Fahrtrichtung FR weisenden Seite jeweils eine horizontal angeordnete, flächige Verstärkungslippe 28 angeordnet.

Diese horizontal angeordnete Verstärkungslippe 28 ist eben ausgebildet und ist in einer Ebene unterhalb der in den Aufnahmegliedern 14a, 14b vorgesehenen Bohrungen 32 angeordnet.

Eine der Aufnahmen 20 ist über ein stabförmiges Verbindungselement mit dem Versteifungselement 60 verbunden.

Die erste Aufnahme 16 bildet erfindungsgemäß das hintere Ende des Vorderachsträgers 10.

Die Aufnahme 24 weist ein in Richtung einer der ersten Aufnahmen 16 verlaufendes Verbindungselement 36 auf und ist mit dieser 16 indirekt verbunden.

Das Versteifungselement 60 weist an den zu den Auslegern führende Enden Knotenpunkte 42 auf, in denen wenigstens einzelne, vorzugsweise mehrere vorzugsweise stabförmige Verbindungselemente zusammenlaufen.

Zwei der vier Aufnahmen 22 sind über Stege an den Vorderachsträger 10 angebunden.

### Bezugszeichenliste

### (ist Teil der Beschreibung)

- 10: Vorderachsträger
- 12: hintere Aufnahme zur Lagerung Radführungsglied
- 12a: Lageraufnahmeglied
- 12b: Lageraufnahmeglied
- 14: vordere Aufnahme zur Lagerung Radführungsglied
- 14a: Lageraufnahmeglied
- 14b: Lageraufnahmeglied
- 16: 1. Aufnahme zur Befestigung des Vorderachsträges am Fahrzeugaufbau
- 18: 2. Aufnahme zur Befestigung des Vorderachsträges am Fahrzeugaufbau
- 20: Aufnahmen zur Befestigung eines Lenkgetriebes
- 22: Aufnahmen zur Befestigung des Stabilisators
- 24: Aufnahme zur Lagerung der Pendelstütze
- 26: stabförmige Verbindungselemente
- 28: Verstärkungslippe
- 30: Aushöhlung
- 32: Bohrung
- 34: Ausleger
- 36: Verbindungselemente
- 38: Verstärkungsrippe
- 40: Lasche
- 42: Knotenpunkt
- 44: verstärkter Rand
- 46: Aussparung
- 50: Aufnahme zur Befestigung der Abgasanlage
- 52: flächige Verstärkungslippe
- 54: Verstärkungsrippe
- 56: Lasche
- 58: durchgehende Aussparung
- 60: Versteifungselement

- F: Fahrzeuglängsrichtung/-achse
- FR: Fahrtrichtung

Weiterbildungen und vorteilhafte Ausgestaltungen der Erfindung werden im Folgenden offenbart. Der Offenbarungsgehalt ergibt sich auch aus der nachveröffentlichten Dissertation "Legierungsentwicklung für hochfesten Aluminiumguss in Dauerformgießverfahren für Fahrwerksanwendungen", Andreas G. R. Hennings, RWTH Aachen Gießerei-Institut, Forschung, Entwicklung, Ergebnisse, Band 56. Der Offenbarungsgehalt dieser Dissertation, welche der prioritätsbegründenden Anmeldung DE 10 2007 053 159 entspricht, wird durch ausdrücklichen Verweis als zum Gegenstand der vorliegenden Anmeldung gehörig in diese aufgenommen.

## Patentansprüche

1. Vorderachsträger (10) für Kraftfahrzeuge, bei dem jeweils zwei in Fahrzeuglängsrichtung (F) voneinander beabstandete Aufnahmen (12, 14) für die Lagerstellen zur Schwenklagerung je eines von zwei Radführungsgliedern, wie Quer- bzw. Dreieckslenker; und Aufnahmen (16, 18) zur Befestigung des Vorderachsträgers (10) als vorgefertigte Einheit mitsamt vormontierten Aggregaten am Fahrzeugaufbau vorgesehen sind, sowie wenigstens einzelne der nachfolgend angeführten Aufnahmen für
- die Befestigung des Lenkgetriebes (20)
- die Befestigung des Stabilisators (22)
- die Lagerung einer Pendelstütze (24)
und der Vorderachsträger (10) als mit diesen Aufnahmen (12, 14, 16, 18, 20, 22, 24) einstückiges und diese untereinander verbindendes Bauteil hergestellt ist, **dadurch gekennzeichnet, dass** die Aufnahmen (16, 18) zur Befestigung des Vorderachsträgers erste Aufnahmen (16) umfassen, die untereinander mit einem Verbindungselement verbunden sind, wobei an dem die ersten Aufnahmen (16) untereinander verbindenden Verbindungselement wenigstens eine Aufnahme (50) für Befestigungsmittel zur Festlegung der Abgasanlage vorgesehen ist.

2. Vorderachsträger (10) für Kraftfahrzeuge nach Anspruch 1, **dadurch gekennzeichnet, dass** wenigstens einzelne der Aufnahmen (12, 14, 16, 18, 20, 22, 24, 50) wenigstens teilweise über stabförmige und/oder flächenförmige Verbindungselemente (26, 36) im Vorderachsträger (10) integriert und/oder miteinander verbunden sind.

3. Vorderachsträger (10) für Kraftfahrzeuge nach einem der Ansprüche 1 bis 2, **dadurch gekennzeichnet, dass** wenigstens einzelne der Aufnahmen (12, 14, 16, 18, 20, 22, 24, 50) wenigstens teilweise über offenprofilförmige Verbindungselemente (36), insbesondere solche mit im Wesentlichen T-, U-, V-, L-, X-, Y-und/oder Doppel-T-förmigen Querschnitt, integriert und/oder miteinander verbunden sind.

4. Vorderachsträger (10) für Kraftfahrzeuge nach Anspruch 3, **dadurch gekennzeichnet, dass** einzelne Schenkel der offenprofilförmigen Verbindungselemente (36) als Verstärkungsrippen ausgelegt sind.

5. Vorderachsträger (10) für Kraftfahrzeuge nach einem der Ansprüche 2 bis 4, **dadurch gekennzeichnet, dass** die Verbindungselemente (26, 36) zusätzliche Verstärkungsrippen, -gurte, -sicken, -wulste, -stege und/oder -durchbrüche aufweisen.

6. Vorderachsträger (10) für Kraftfahrzeuge nach einem der Ansprüche 1 bis 5, **dadurch gekennzeichnet, dass** die in Fahrtrichtung (FR) hintere Aufnahme (12) zur Lagerung jedes der Radführungsglieder zumindest annähernd vertikal zur Fahrzeuglängsachse (F) beabstandete Aufnahmeglieder (12a, 12b) besitzt, zur umgreifenden Halterung des in Fahrtrichtung (FR) hinteren Lagers am Radführungsglied, wobei die Aufnahmeglieder (12a, 12b) über eine U-förmige Lasche (40) miteinander verbunden und im Vorderachsträger (10) integriert sind.

7. Vorderachsträger (10) für Kraftfahrzeuge nach Anspruch 6, **dadurch gekennzeichnet, dass** die Lasche (40) wenigstens teilweise, vorzugsweise auf ihrer Außenseite, einen verstärkten Rand (44) aufweist.

8. Vorderachsträger (10) nach einem der Ansprüche 6 bis 7 **dadurch gekennzeichnet, dass** die Lasche (40) über wenigstens ein Verbindungselement mit einer ersten Aufnahme (16) für Befestigungsmittel zur Festlegung des Vorderachsträgers (10) am Fahrzeugaufbau verbunden ist.

9. Vorderachsträger (10) nach Anspruch 1, **dadurch gekennzeichnet, dass** an dem die ersten Aufnahmen (16) zur Befestigung des Vorderachsträgers (10) untereinander verbindenden Verbindungselement, vorzugsweise auf der entgegen der Fahrtrichtung (FR) weisenden Seite, zwei Aufnahmen (50) für Befestigungsmittel zur Festlegung der Abgasanlage vorgesehen sind.

10. Vorderachsträger (10) nach Anspruch 9, **dadurch gekennzeichnet, dass** die Aufnahmen (50) für Befestigungsmittel zur Festlegung der Abgasanlage und/oder die ersten Aufnahmen (16) in und/oder an der entgegen der Fahrtrichtung (FR) weisenden Seitenwand, die durch einen der Schenkel des U-förmigen Verbindungselements gebildet ist, und/oder an und/oder in einer daran anschließenden flächigen Verstärkungslippe (52) integriert sind.

11. Vorderachsträger (10) nach einem der Ansprüche 1 bis 10, **dadurch gekennzeichnet, dass** das die ersten Aufnahmen (16) untereinander verbindende Verbindungselement in und/oder entgegen der Fahrtrichtung (FR) an seiner Unterseite eine flächige, im Wesentlichen horizontal angeordnete Verstärkungslippe (52) aufweist.

12. Vorderachsträger (10) nach einem der Ansprüche 6 bis 11, **dadurch gekennzeichnet, dass** die die Aufnahmeglieder (12a, 12b) verbindende Lasche (40) über ein Verbindungselement mit der in Fahrtrichtung (FR) angeordneten Aufnahme (20) für die Befestigung des Lenkgetriebes verbunden ist.

13. Vorderachsträger (10) nach Anspruch 12, **dadurch gekennzeichnet, dass** die Aufnahme (20) für die Befestigung des Lenkgetriebes über ein vorzugsweise zumindest teilweise stabförmiges Verbindungselement mit der in Fahrtrichtung (FR) angeordneten zweiten Aufnahme (18) zur Befestigung des Vorderachsträgers (10) am Fahrzeugaufbau verbunden ist, welche (18) ihrerseits vorzugsweise in einem Ausleger (34) integriert unmittelbar mit der in Fahrtrichtung (FR) vorderen Aufnahme (14) zur Lagerung jedes der Radführungsglieder verbunden ist.

14. Vorderachsträger (10) nach Anspruch 13, **dadurch gekennzeichnet, dass** an dem die Aufnahme (20) für die Befestigung des Lenkgetriebes mit der zweiten Aufnahme (18) bzw. dem Ausleger (34) verbindenden Verbindungselement eine der Aufnahmen (22) für die Befestigung des Stabilisators angebunden ist.

15. Vorderachsträger (10) nach Anspruch 13 bis 14, **dadurch gekennzeichnet, dass** die in Fahrtrichtung (FR) vordere Aufnahme (14) zur Lagerung jedes der Radführungsglieder zwei zumindest annähernd in Fahrzeuglängsrichtung (F) beabstandete Aufnahmeglieder (14a, 14b) besitzt, zur U-förmig umgreifenden Halterung des in Fahrtrichtung (FR) vorderen Lagers am Radführungsglied, wobei das eine Aufnahmeglied (14a) vorzugsweise unmittelbar an den Ausleger (34) der Aufnahme (18) anschließt und das andere Aufnahmeglied (14b) innerhalb des kurzen Schenkels einer L-förmigen Lasche (56), die mit ihrem nicht das Aufnahmeglied aufweisenden Ende vorzugsweise an den Ausleger (34) anschließt, integriert ist.

16. Vorderachsträger (10) nach einem der Ansprüche 13 bis 15, **dadurch gekennzeichnet, dass** der Ausleger (34) eine Aussparung aufweist, die einseitig oder beidseitig eingebracht ist.

17. Vorderachsträger (10) nach einem der Ansprüche 13 bis 16, **dadurch gekennzeichnet, dass** der Ausleger (34) eine durchgehende Aussparung (58) aufweist.

18. Vorderachsträger (10) nach einem der Ansprüche 1 bis 17, **dadurch gekennzeichnet, dass** der Vorderachsträger (10) in Querrichtung ein die Ausleger (34) verbindendes Versteifungselement (60) aufweist, in dem oder an dem die Aufnahme (24) für die Lagerung der Pendelstütze angeordnet ist.

19. Vorderachsträger (10) nach Anspruch 18 **dadurch gekennzeichnet, dass** das Versteifungselement (60) offenprofilförmig, insbesondere mit im Wesentlichen T-, U-, V-, oder L-förmigen Querschnitt ausgebildet ist, wobei vorzugsweise die Kanten und Ränder des Versteifungselements verstärkt sind.

20. Vorderachsträger (10) nach einem der Ansprüche 18 bis 19, **dadurch gekennzeichnet, dass** eine der Aufnahmen (20) für die Befestigung des Lenkgetriebes über ein vorzugsweise stabförmiges Verbindungselement mit dem Versteifungselement (60) verbunden ist.

21. Vorderachsträger (10) nach einem der Ansprüche 1 bis 20, **dadurch gekennzeichnet, dass** die erste Aufnahme (16) zur Befestigung des Vorderachsträgers (10) am Fahrzeugaufbau das hintere Ende des Vorderachsträgers (10) bildet.

22. Vorderachsträger (10) nach einem der Ansprüche 1 bis 21, **dadurch gekennzeichnet, dass** die Aufnahme (24) für die Lagerung der Pendelstütze ein in Richtung einer der ersten Aufnahmen (16) verlaufendes Verbindungselement aufweist und mit dieser (16) direkt oder indirekt verbunden ist.

23. Vorderachsträger (10) nach einem der Ansprüche 1 bis 22, **dadurch gekennzeichnet, dass** die Aufnahme (24) für die Lagerung der Pendelstütze über ein Verbindungselement mit einer der Aufnahmen (20) für die Befestigung des Lenkgetriebes verbunden ist.

24. Vorderachsträger (10) für Kraftfahrzeuge nach einem der Ansprüche 1 bis 23, **dadurch gekennzeichnet, dass** die Fläche der durch die Verbindungselemente begrenzten Aussparungen in Draufsicht auf den Vorderachsträger (10) größer ist als die in Draufsicht auf den Vorderachsträger (10) nicht durchgängige Fläche des Vorderachsträgers (10).

25. Vorderachsträger (10) für Kraftfahrzeuge nach einem der Ansprüche 1 bis 24, **dadurch gekennzeichnet, dass** der Vorderachsträger (10) zwei Aufnahmen (20) für die Befestigung des Lenkgetriebes aufweist.

26. Vorderachsträger (10) für Kraftfahrzeuge nach einem der Ansprüche 1 bis 25, **dadurch gekennzeichnet, dass** wenigstens einzelne der Aufnahmen über stabförmige Verbindungselemente fachwerkartig im Vorderachsträger integriert sind.

## Claims

1. A front axle carrier (10) for motor vehicles, in which respectively two receptacles (12, 14), which are spaced apart from one another in the longitudinal direction (F) of the vehicle, for the bearing points for the pivoting bearing of in each case one of two wheel-guiding members, such as transverse control arms or triangular control arms; and receptacles (16, 18) for attaching the front axle carrier (10) are provided as a prefabricated unit together with preassembled units on the vehicle structure, and at least individual receptacles of the below-listed receptacles for
- the attachment of the steering gear (20)
- the attachment of the stabiliser (22)
- the bearing of a pendulum support (24)
and the front axle carrier (10) is manufactured as a component forming one piece with these receptacles (12, 14, 16, 18, 20, 22, 24) and connecting these to one another, **characterised in that** the receptacles (16, 18) for attaching the front axle carrier comprise first receptacles (16) which are connected to one another by a connecting element, wherein at least one receptacle (50) for attachment means for affixing the exhaust system is provided on the connecting element which connects the first receptacles (16) to one another.

2. The front axle carrier (10) for motor vehicles according to Claim 1, **characterised in that** at least individual receptacles of the receptacles (12, 14, 16, 18, 20, 22, 24, 50) are integrated in the front axle carrier (10) and/or connected to one another at least partially via rod-shaped and/or sheet-shaped connecting elements (26, 36).

3. The front axle carrier (10) for motor vehicles according to one of Claims 1 to 2, **characterised in that** at least individual receptacles of the receptacles (12, 14, 16, 18, 20, 22, 24, 50) are integrated and/or connected to one another at least partially via connecting elements (36) with an open profile shape, in particular those with a cross-section which is substantially in the shape of a T, U, V, L, X, Y and/or double T.

4. The front axle carrier (10) for motor vehicles according to Claim 3, **characterised in that** individual legs of the open-profile-shaped connecting elements (36) are designed as reinforcing ribs.

5. The front axle carrier (10) for motor vehicles according to one of Claims 2 to 4, **characterised in that** the connecting elements (26, 36) have additional reinforcing ribs, bands, seams, beads, bars or perforations.

6. The front axle carrier (10) for motor vehicles according to one of Claims 1 to 5, **characterised in that** the receptacle (12) which is to the rear in the direction of travel (FR) for the bearing of each of the wheel-guiding members possesses receiving members (12a, 12b) spaced apart at least approximately vertically to the longitudinal direction (F) of the vehicle, for mounting, in an encompassing manner, the bearing which is to the rear in the direction of travel (FR) on the wheel-guiding member, the receiving members (12a, 12b) being connected to one another via a U-shaped lug (40) and integrated in the front axle carrier (10).

7. The front axle carrier (10) for motor vehicles according to Claim 6, **characterised in that** the lug (40) has at least partially, preferably on its exterior, a reinforced rim (44).

8. The front axle carrier (10) according to one of Claims 6 to 7, **characterised in that** the lug (40) is connected, via at least one connecting element, to a first receptacle (16) for attachment means for affixing the front axle carrier (10) to the vehicle structure.

9. The front axle carrier (10) according to Claim 1, **characterised in that** two receptacles (50) for attachment means for affixing the exhaust system are provided on the connecting element which connects the first receptacles (16), which are for attaching the front axle carrier (10), to one another, preferably on the side pointing away from the direction of travel (FR).

10. The front axle carrier (10) according to Claim 9, **characterised in that** the receptacles (50) for attachment means for affixing the exhaust system, and/or the first receptacles (16) are integrated in and/or on the side wall which points away from the direction of travel (FR) and which is formed by one of the legs of the U-shaped connecting element, and/or on and/or in a planar reinforcing lip (52) which is linked thereto.

11. The front axle carrier (10) according to one of Claims 1 to 10, **characterised in that** the connecting element which connects the first receptacles (16) to one another has, in and/or away from the direction of travel (FR), on its underside, a planar reinforcing lip (52) arranged substantially horizontally.

12. The front axle carrier (10) according to one of Claims 6 to 11, **characterised in that** the lug (40) connecting the receiving members (12a, 12b) is connected, via a connecting element, to the receptacle (20) arranged in the direction of travel (FR) for the attachment of the steering gear.

13. The front axle carrier (10) according to Claim 12, **characterised in that** the receptacle (20) for the attachment of the steering gear, via a preferably at least partially rod-shaped connecting element, is connected to the second receptacle (18) arranged in the direction of travel (FR) for attaching the front axle carrier (10) to the vehicle structure, which (18) for its part preferably integrated in a bracket (34) is directly connected to the receptacle (14) at the front in the direction of travel (FR) for bearing each of the wheel-guiding members.

14. The front axle carrier (10) according to Claim 13, **characterised in that** one of the receptacles (22) for the attachment of the stabiliser is bound to the connecting element which connects the receptacle (20), which is for the attachment of the steering gear, to the second recess (18) or the bracket (34).

15. The front axle carrier (10) according to Claim 13 to 14, **characterised in that** the receptacle (14) at the front in the direction of travel (FR) for bearing each of the wheel-guiding members possesses two receiving members (14a, 14b) at least approximately spaced apart in the longitudinal direction (F) of the vehicle, for mounting, in an encompassing U-shaped manner, the bearing at the front in direction of travel (FR) on the wheel-guiding member, wherein one receiving member (14a) is preferably directly linked to the bracket (34) of the receptacle (18) and the other receiving member (14b) is integrated within the short leg of an L-shaped lug (56) which preferably links to the bracket (34) by its end which does not have the receiving member.

16. The front axle carrier (10) according to one of Claims 13 to 15, **characterised in that** the bracket (34) has a recess which is produced on one side or both sides.

17. The front axle carrier (10) according to one of Claims 13 to 16, **characterised in that** the bracket (34) has a continuous recess (58).

18. The front axle carrier (10) according to one of Claims 1 to 17, **characterised in that**, in the transverse direction, the front axle carrier (10) has a stiffening element (60) which connects the bracket (34) and in which or on which the receptacle (24) is arranged for the bearing of the pendulum support.

19. The front axle carrier (10) according to Claim 18, **characterised in that** the stiffening element (60) is configured with an open profile shape, in particular with a substantially T, U, V or L-shaped cross-section, with the edges and rims of the stiffening element preferably being strengthened.

20. The front axle carrier (10) according to one of Claims 18 to 19, **characterised in that** one of the receptacles (20) for the attachment of the steering gear is connected to the stiffening element (60) via a preferably rod-shaped connecting element.

21. The front axle carrier (10) according to one of Claims 1 to 20, **characterised in that** the first receptacle (16) for attaching the front axle carrier (10) to the vehicle structure forms the rear end of the front axle carrier (10).

22. The front axle carrier (10) according to one of Claims 1 to 21, **characterised in that**, the receptacle (24) for the bearing of the pendulum support has a connecting element which runs towards one of the first receptacles (16), and is directly or indirectly connected to this (16).

23. The front axle carrier (10) according to one of Claims 1 to 22, **characterised in that** the receptacle (24) for the bearing of the pendulum support is connected, via a connecting element, to one of the receptacles (20) for the attachment of the steering gear.

24. The front axle carrier (10) for motor vehicles according to one of Claims 1 to 23, **characterised in that** the surface of the recesses delimited by the connecting elements, in plan view onto the front axle carrier (10), is larger than the surface of the front axle carrier (10) which is not continuous in plan view onto the front axle carrier (10).

25. The front axle carrier (10) for motor vehicles according to one of Claims 1 to 24, **characterised in that** the front axle carrier (10) has two receptacles (20) for the attachment of the steering gear.

26. The front axle carrier (10) for motor vehicles according to one of Claims 1 to 25, **characterised in that** at least individual receptacles of the receptacles are integrated in the front axle carrier via rod-shaped connecting elements in a lattice-type manner.

## Revendications

1. Support d'essieu avant (10) destiné à des véhicules automobiles comportant respectivement deux parties de réception (12, 14) espacées l'une de l'autre dans le sens longitudinal du véhicule (F), destinées à des emplacements de logement de support articulé d'un de deux organes de guidage de roue, tels que des bras oscillants transversaux ou des bras triangulaires, et des parties de réception (16, 18) destinées à la fixation du support d'essieu avant (10) qui sont présentes en tant qu'unité préfabriquée avec des modules prémontés sur la carrosserie du véhicule, ainsi qu'au moins certaines des parties de réception, mentionnées ci-après, destinées à
- la fixation du mécanisme de direction (20)
- la fixation du stabilisateur (22)
- au logement d'un support oscillant (24)
et le support d'essieu avant (10) est fabriqué comme composant formant une seule pièce avec ces parties de réception (12, 14, 16, 18, 20, 22, 24), qu'il relie entre elles, **caractérisé en ce que** les parties de réception (16, 18) destinées à la fixation du support d'essieu avant comprennent des premières parties de réception (16) qui sont reliées entre elles au moyen d'un élément de liaison, au moins une partie de réception (50) destinée à des moyens de fixation du système d'évacuation des gaz d'échappement étant prévue sur l'élément de liaison reliant les premières parties de réception (16) entre elles.

2. Support d'essieu avant (10) destiné à des véhicules automobiles suivant la revendication 1, **caractérisé en ce qu'**au moins certaines des parties de réception (12, 14, 16, 18, 20, 22, 24, 50) sont au moins partiellement intégrées dans le support d'essieu avant (10) et/ou reliées entre elles au moyen d'éléments de liaison en forme de tige ou de nappe.

3. Support d'essieu avant (10) destiné à des véhicules automobiles suivant une des revendications 1 à 2, **caractérisé en ce qu'**au moins certaines des parties de réception (12, 14, 16, 18, 20, 22, 24, 50) sont intégrées et/ou reliées entre elles au moins partiellement au moyen d'éléments de liaison (36) à profil ouvert, en particulier au moyen de ceux présentant une section transversale essentiellement en forme de T, U, V, L, X, Y et/ou en forme de double T.

4. Support d'essieu avant (10) destiné à des véhicules automobiles suivant la revendication 3, **caractérisé en ce que** certaines branches des éléments de liaison (36) à profil ouvert sont conçues comme nervures de renforcement.

5. Support d'essieu avant (10) destiné à des véhicules automobiles suivant une des revendications 2 à 4, **caractérisé en ce que** les éléments de liaison (26, 36) présentent des nervures, sangles, moulures, bourrelets, entretoises et/ou ouvertures de renforcement supplémentaires.

6. Support d'essieu avant (10) destiné à des véhicules automobiles suivant une des revendications 1 à 5, **caractérisé en ce que** la partie de réception (12), arrière dans le sens de déplacement (FR), destinée au logement de chacun des organes de guidage de roue, possède des membres de réception (12a, 12b) espacés au moins à peu près verticalement par rapport à l'axe longitudinal du véhicule pour la fixation entourante du logement arrière dans le sens de déplacement du véhicule (FR) sur l'organe de guidage de roue, les membres de réception (12a, 12b) étant reliés entre eux au moyen d'une languette en forme de U (40) et intégrés dans le support d'essieu avant (10).

7. Support d'essieu avant (10) destiné à des véhicules automobiles suivant la revendication 6, **caractérisé en ce que** la languette (40) présente au moins partiellement un bord renforcé (44), de préférence sur sa face extérieure.

8. Support d'essieu avant (10) suivant une des revendications 6 à 7, **caractérisé en ce que** la languette (40) est reliée au moyen d'au moins un élément de liaison à une première partie de réception (16) destinée à des moyens de fixation du support d'essieu avant (10) sur la carrosserie du véhicule.

9. Support d'essieu avant (10) suivant la revendication 1, **caractérisé en ce que** deux parties de réception (50) destinées à des moyens de fixation du système d'évacuation des gaz d'échappement sont prévues sur l'élément de liaison reliant entre elles les premières parties de réception (16) destinées à la fixation du support d'essieu avant (10), de préférence sur le côté opposé au sens de déplacement (FR).

10. Support d'essieu avant (10) suivant la revendication 9, **caractérisé en ce que** les parties de réception (50) destinées à des moyens de fixation du système d'évacuation des gaz d'échappement et/ou les premières parties de réception (16) sont intégrées dans/ou sur la paroi latérale opposée au sens de déplacement (FR), paroi latérale, qui est formée par une des branches de l'élément de liaison en forme de U et/ou intégrée dans/ou sur une lèvre de renforcement en forme de nappe qui s'y raccorde (52).

11. Support d'essieu avant (10) suivant une des revendications 1 à 10, **caractérisé en ce que** l'élément de liaison reliant les premières parties de réception entre elles présente sur sa face inférieure, dans le sens ou à l'opposé du sens de déplacement (FR), une lèvre de renforcement (52) en forme de nappe disposée essentiellement horizontalement.

12. Support d'essieu avant (10) suivant une des revendications 6 à 11, **caractérisé en ce que** la languette (40) reliant entre eux les membres de réception (12a, 12b) est reliée au moyen d'un élément de liaison à la partie de réception (20) destinée à la fixation du mécanisme de direction, disposée dans le sens de déplacement.

13. Support d'essieu avant (10) suivant la revendication 12, **caractérisé en ce que** la partie de réception (20) destinée à la fixation du mécanisme de direction est reliée au moyen d'un élément de liaison au moins partiellement en forme de tige à la seconde partie de réception (18) destinée à la fixation du support d'essieu avant (10) sur la carrosserie, disposée dans le sens de déplacement (FR), seconde partie de réception (18) qui est, pour sa part, de préférence intégrée dans un bras (34), reliée directement à la partie de réception (14) avant dans le sens de déplacement (FR), destinée au logement de chacun des organes de guidage de roue.

14. Support d'essieu avant (10) suivant la revendication 13, **caractérisé en ce qu'**une des parties de réception (22) destinées à la fixation du stabilisateur est fixée à l'élément de liaison reliant la partie de réception (20) destinée à la fixation du mécanisme de direction à la seconde partie de réception (18), c'est-à-dire au bras (34).

15. Support d'essieu avant (10) suivant la revendication 13 à 14, **caractérisé en ce que** la partie de réception (14) avant dans le sens de déplacement (FR), destinée au logement de chacun des organes de guidage de roue possède deux membres de réception (14a, 14b) espacés au moins approximativement dans le sens longitudinal du véhicule (F) pour la fixation entourante en forme de U du logement avant dans le sens de déplacement (FR) sur l'organe de guidage de roue, l'un des membres de réception (14a) se raccordant, de préférence, directement au bras (34) de la partie de réception (18) et l'autre membre de réception (14b) étant intégré à l'intérieur de la branche courte d'une languette en forme de L (56), qui se raccorde, de préférence, au bras (34) avec son extrémité ne présentant pas le membre de réception.

16. Support d'essieu avant (10) suivant une des revendications 13 à 15, **caractérisé en ce que** le bras (34) présente un évidement pratiqué sur un côté ou les deux côtés.

17. Support d'essieu avant (10) suivant une des revendications 13 à 16, **caractérisé en ce que** le bras (34) présente un évidement (58) traversant.

18. Support d'essieu avant (10) suivant une des revendications 1 à 17, **caractérisé en ce que** le support d'essieu avant (10) présente, dans le sens transversal, un élément de rigidification (60) reliant entre eux les bras (34), élément de rigidification, dans ou sur lequel est disposée la partie de réception (24) destinée au logement du support oscillant.

19. Support d'essieu avant (10) suivant la revendication 18, **caractérisé en ce que** l'élément de rigidification (60) est conçu de manière à former un profil ouvert, en particulier avec une section transversale essentiellement en forme de T, de U, de V ou de L, les arêtes et bords de l'élément de rigidification étant, de préférence, renforcés.

20. Support d'essieu avant (10) suivant une des revendications 18 à 19, **caractérisé en ce qu'**une des parties de réception (20) destinées à la fixation du mécanisme de direction est reliée à l'élément de rigidification (60) au moyen d'un élément de liaison, de préférence, en forme de tige.

21. Support d'essieu avant (10) suivant une des revendications 1 à 20, **caractérisé en ce que** la première partie de réception (16) destinée à la fixation du support d'essieu avant (10) sur la carrosserie forme l'extrémité arrière du support d'essieu avant (10).

22. Support d'essieu avant (10) suivant une des revendications 1 à 21, **caractérisé en ce que** la partie de réception (24) destinée au logement du support oscillant présente un élément de liaison s'étendant en direction d'une des premières parties de réception (16), à laquelle il est relié directement ou indirectement.

23. Support d'essieu avant (10) suivant une des revendications 1 à 22, **caractérisé en ce que** la partie de réception (24) destinée au logement du support oscillant est reliée au moyen d'un élément de liaison à une des parties de réception (20) destinées à la fixation du mécanisme de direction.

24. Support d'essieu avant (10) suivant une des revendications 1 à 23, **caractérisé en ce que**, dans une vue de dessus du support d'essieu avant, la surface des évidements délimités par les éléments de liaison est plus grande que la surface non continue du support d'essieu avant (10) vue de dessus.

25. Support d'essieu avant (10) suivant une des revendications 1 à 24, **caractérisé en ce que** le support d'essieu avant (10) présente deux parties de réception (20) destinées à la fixation du mécanisme de direction.

26. Support d'essieu avant (10) suivant une des revendications 1 à 25, **caractérisé en ce qu'**au moins certaines des parties de réception sont intégrées à la manière d'un treillis dans le support d'essieu avant au moyen d'éléments de liaison en forme de tige.
